# EUROPEAN PATENT APPLICATION

(11) **EP 4 485 748 A1**
(43) Date of publication of application: **01.01.2025**
(21) Application number: 23181970.7
(22) Date of filing: 28.06.2023
(51) Int. Cl.: H02J 7/02, H02J 50/12, H02J 50/80

(54) **WIRELESS POWER TRANSFER**

(71) Applicant: Koninklijke Philips N.V., 5656 AG Eindhoven (NL)
(72) Inventor: AGAFONOV, Aleksei, 5656AG Eindhoven (NL); STARING, Antonius Adriaan Maria, 5656AG Eindhoven (NL)
(74) Representative: Philips Intellectual Property & Standards

(57) **Abstract**

A power receiver (105) wirelessly receives power from a power transmitter (101) via an electromagnetic power transfer signal and comprises an input circuit (107, 501) with a receiver coil (107) extracting power from the power transfer signal to generate an induced power signal. A rectifier circuit (503) rectifies the induced power signal and comprises a switch element, such as a FET, arranged to switch a path between a conductive mode and a non-conductive mode in response to a switch control signal. A rectifier controller (507) generates the switch control signal in dependence on the induced power signal. A load modulator (511) receives data for communication to the power transfer and generates a load modulation signal indicative of load variations representing the data. The rectifier controller (507) is arranged to adapt the switch control signal in response to the load modulation signal. The approach of load modulating the power transfer signal using the rectifier circuit may provide improved performance.

## Description

### FIELD OF THE INVENTION

The invention relates to wireless power transfer and in particular, but not exclusively, to communication in a power transfer system such as the Qi wireless power transfer Specification.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

Based on the Qi Specification, an approach known as the Ki specification is being developed for high power applications, such as specifically for Kitchen appliances.

In order to support efficient wireless power transfer, wireless power transfer systems, such as Qi based systems, utilize substantial communication between the power transmitter and the power receiver. Initially, Qi supported only communication from the power receiver to the power transmitter using load modulation of the power transfer signal. Thus, initial Qi devices support only unidirectional communication from the power receiver to the power transmitter.

However, developments of the standard have introduced bidirectional communication and many functions are supported by communication exchanges between the power receiver and the power transmitter. In many systems, the communication from the power transmitter to the power receiver is accomplished by modulating the power transfer signal.

Communicating using load modulation of the power transfer signal transferring power to the power receiver may have a number of advantages but also tends to have some associated disadvantages. In particular, the implementation of functionality in the power receiver for performing the load modulation may have some associated disadvantages.

In one known approach, the power receiver load modulates the power transfer signal by changing the resonant properties of the power receiver input thereby changing the operating point of the wireless power transfer system. This may typically be done by switching a load modulation capacitor being part of the input resonance circuit of the power receiver.

In another approach, the power receiver is arranged change the real value of the load provided by the power receiver, and specifically a resistive component of the load of the power transfer signal may be changed. This may specifically be achieved by switching in and out a resistive load. However, such a modulation resistor may dissipate power which may cause additional heating and reduce efficiency. It may also make the modulation depth dependent on the operating point.

Another option is to change the actual current drained by the target load, e.g. by adapting the setpoint of a DC-DC converter included in the power path. This may provide advantages as the power receiver can control the amount of modulation current and can adjust it as desired. Further, it does not result in further (thermal) losses in the power receiver. However, in many scenarios, the power provided to the target load is a typically a rectified and smoothed voltage, and indeed in many cases is a DC signal. Typically, a large smoothing capacitor is included in the power path. Accordingly, any target load changes will tend to be heavily attenuated, smoothed, and filtered by the power path. This may substantially reduce the modulation load variation of the power transfer signal and make it more difficult to detect any load modulation at the power transmitter.

Although real load modulation is considered as a more robust way of load modulation, it accordingly also has a number of disadvantages as indeed do all the current approaches for load modulating the power transfer signal.

Hence, an improved approach would be advantageous, in particular, an approach allowing increased flexibility, reduced cost, reduced complexity, improved power transfer operation, increased reliability, reduced communication errors, improved backwards compatibility, improved load modulation, improved efficiency, reduced thermal losses, improved communication, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power receiver for wirelessly receiving power from a power transmitter via an electromagnetic power transfer signal, the power receiver comprising: an input circuit comprising a receiver coil arranged to extract power from the power transfer signal to generate an induced power signal; a rectifier circuit having an input coupled to the input circuit and an output coupled to a power load, the rectifier circuit being arranged to rectify the induced power signal and comprising at least one switch element arranged to switch a path from the input to the output between a conductive mode and a non-conductive mode in response to a switch control signal; a rectifier controller arranged to generate the switch control signal in dependence on the induced power signal; a load modulator arranged to receive data for communication to the power transmitter and to generate a load modulation signal indicative of load variations representing the data; and wherein the rectifier controller is further arranged to adapt the switch control signal in dependence on the load modulation signal.

The invention may allow improved performance in many embodiments and may in particular in many embodiments allow improved communication between a power receiver and a power transmitter. It may allow improved power transfer in many embodiments.

The approach may allow improved communication, and in many embodiments may allow improved trade-off between different parameters and operating characteristics. The approach may e.g. allow highly reliable communication. The approach may in many embodiments allow improved load modulation without requiring dedicated modulation loads to be introduced to the input circuit.

The rectifier controller may be arranged to generate the switch control signal in dependence on the induced power signal such that it switches the switch element to the conductive mode only for current flowing through the switch element in one direction during an AC cycle of the induced power signal.

The rectifier controller may be arranged to generate the switch control signal to be synchronized with the induced power signal.

The rectifier controller may be arranged to change a criterion for changing the switch control signal between a value setting the switch in the conductive mode and a value setting the switch in the non-conductive mode in dependence on the load modulation signal.

The load modulator may be arranged to generate the load modulation signal to have a set of values with each of the values representing a different modulation load, and the rectifier controller may be arranged to change apply a different criterion for each value of the load modulation signal.

The rectifier controller may in many embodiments be arranged to synchronize at least one of entering the conductive mode and entering the non-conductive mode to the induced power signal. The load modulation signal may be series of load modulation values, such as load modulation chip or bit values.

In accordance with an optional feature of the invention, the rectifier controller is arranged to generate the switch control signal in dependence on a voltage over the switch element.

This may provide improved performance and an efficient, reliable, and/or low complexity operation and/or functionality.

In accordance with an optional feature of the invention, the rectifier controller is arranged to control the switch control signal to switch the switch element from the non-conductive mode to the conductive mode in response to a detection that a voltage over the switch element exceeds a threshold.

This may provide improved performance and/or implementation. It may in many scenarios, provide improved performance and an efficient, reliable, and/or low complexity operation and/or functionality.

The voltage may be a voltage from the input of the rectifier circuit to the output of the rectifier circuit.

In accordance with an optional feature of the invention, the rectifier controller is arranged to adapt the threshold in response to the load modulation signal.

This may provide improved performance and/or implementation. It may in many embodiments provide a particularly efficient implementation allowing an effective control of the loading of the power transfer signal.

In accordance with an optional feature of the invention, the rectifier controller is arranged to adapt a duration of a time interval in each AC cycle of the induced power signal in which the switch control signal sets the switch element in the conductive mode in dependence on the load modulation signal.

This may provide improved performance and/or implementation. It may in many embodiments provide a particularly efficient implementation allowing an effective control of the loading of the power transfer signal. The rectifier controller 507 may be arranged to adapt or change the ratio/ duty cycle of the conducting mode in dependence on the load modulation signal.

In accordance with an optional feature of the invention, the switch element is a Field Effect Transistor, FET.

This may provide particularly improved performance and/or implementation in many embodiments. The use of a FET may provide efficient switching and advantageous control. Further, the use of the FET provides a body diode which accordingly may provide a built-in passive rectification element/diode which may allow a particularly advantageous operation and facilitate controlling the FET to provide different loadings of the power transfer signal.

In accordance with an optional feature of the invention, the FET is an N-channel FET configured to operate with a negative drain source voltage for at least part of a time interval of a cycle of the induced power signal in which the switch control signal sets the switch in the conductive mode.

This may provide particularly efficient and advantageous operation in many embodiments. It may allow effective usage of the body diode of the FET to complement the conduction of the FET when in the conductive mode.

In accordance with an optional feature of the invention, the rectifier controller is arranged to switch between an active switch mode in which the switch control signal switches the switch between the conductive and non-conductive modes during an AC cycle of the induced power signal and a passive mode in which the FET is maintained in the non-conductive mode throughout the AC cycle and rectification is performed by a body diode of the FET.

This may provide particularly advantageous performance and/or implementation in many embodiments.

In accordance with an optional feature of the invention, the rectifier circuit comprises a current measurer for measuring a current through a body diode of the FET when the FET is in the non-conductive mode and the rectifier circuit is arranged to control the switch signal to switch the FET to the conductive mode in response to a detection that the current through the body diode exceeds a threshold.

This may provide particularly advantageous performance and/or implementation in many embodiments.

In some embodiments, the rectifier controller is arranged to adapt the threshold in response to the load modulation signal.

This may provide particularly advantageous performance and/or implementation in many embodiments.

In accordance with an optional feature of the invention, the rectifier controller is arranged to determine an operating point for the power transfer and to adapt the switch control signal in dependence on the operating point.

This may provide improved performance and/or implementation in many embodiments. The operating point may be a power level of the power transfer, an average current through the rectifier, etc. The adaptation may be of a duty cycle of different modes (e.g. the conducting mode and nonconducting mode).

In accordance with an optional feature of the invention, the load modulator is arranged to generate the load modulation signal with each data symbol being modulated by a sequence of modulation load values corresponding to a chip sequence of a set of modulation chip sequences, chip sequences of the set of chip sequences being linked to different data symbol values.

The approach may provide particularly advantageous operation and performance for systems that utilize chip sequence based communication, such as systems employing (Differential) Direct Sequence Spread Spectrum techniques. Such communication techniques tend to have a high chip rate, and indeed the chip rate which is often of the same order of magnitude as the frequency of the power transfer signal. Accordingly, the rectification and smoothing of the power transfer signal may often substantially attenuate and smooth any load modulation by the target load thereby degrading the communication.

In accordance with an optional feature of the invention, the rectifier circuit comprises a plurality of switch elements and the rectifier controller is arranged to generate a switch control signal for at least some of the plurality of switch elements.

This may in many embodiments provide improved performance. In many scenarios, it may for example provide improved full wave rectification with e.g. reduced power loss and thermal heating.

In accordance with an optional feature of the invention, the rectifier controller is arranged to adapt only a subset of the switch control signals in dependence on the load modulation signal.

This may in many embodiments provide improved performance. For example, in many embodiments, it may allow reduced power dissipation and/or may facilitate control.

In accordance with an optional feature of the invention, the rectifier controller is arranged to change the subset with an interval not exceeding 1 second (or in some cases 0.5 seconds, 5 seconds or 10 seconds.

In accordance with another aspect of the invention, there is provided a method of operation for a power receiver wirelessly receiving power from a power transmitter via an electromagnetic power transfer signal, the method comprising: an input circuit comprising a receiver coil extracting power from the power transfer signal to generate an induced power signal; a rectifier circuit having an input coupled to the input circuit and an output coupled to a power load and rectifying the induced power signal and comprising at least one switch element arranged to switch a path from the input to the output between a conductive mode and a non-conductive mode in response to a switch control signal; generating the switch control signal in dependence on the induced power signal; receiving data for communication to the power transmitter and to generate a load modulation signal indicative of load variations representing the data; and adapting the switch control signal in response to the load modulation signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
Fig. 1 illustrates an example of elements of a power transfer system in accordance with some embodiments of the invention;
Fig. 2 illustrates an example of elements of a power transmitter in accordance with some embodiments of the invention;
Fig. 3 illustrates an example of a half bridge inverter for a power transmitter;
Fig. 4 illustrates an example of a full bridge inverter for a power transmitter;
Fig. 5 illustrates an example of elements of a power receiver in accordance with some embodiments of the invention;
FIG. 6 illustrates an example of chip sequences;
FIG. 7 illustrates an example of signals in a wireless power transfer system comprising a power receiver in accordance with some embodiments of the invention;
FIG. 8 illustrates an example of signals in a wireless power transfer system comprising a power receiver in accordance with some embodiments of the invention;
FIG. 9 illustrates an example of elements of a rectifier for a power receiver in accordance with some embodiments of the invention;
FIG. 10 illustrates an example of elements of a rectifier for a power receiver in accordance with some embodiments of the invention; and
FIG. 11 illustrates an example of signals in a wireless power transfer system comprising a power receiver in accordance with some embodiments of the invention.

### DETAILED DESCRIPTION OF THE EMBODIMENTS

The following description focuses on embodiments of the invention applicable to a high power wireless power transfer system utilizing a power transfer approach such as known from the Qi Specification. However, it will be appreciated that the invention is not limited to this application but may be applied to many other wireless power transfer systems.

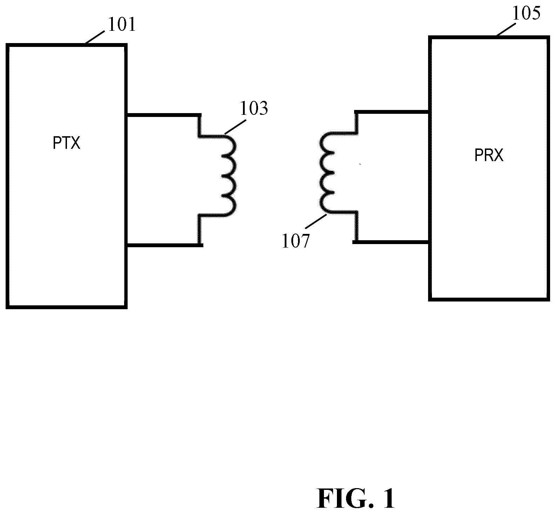

Fig. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems may be around 120-150 kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

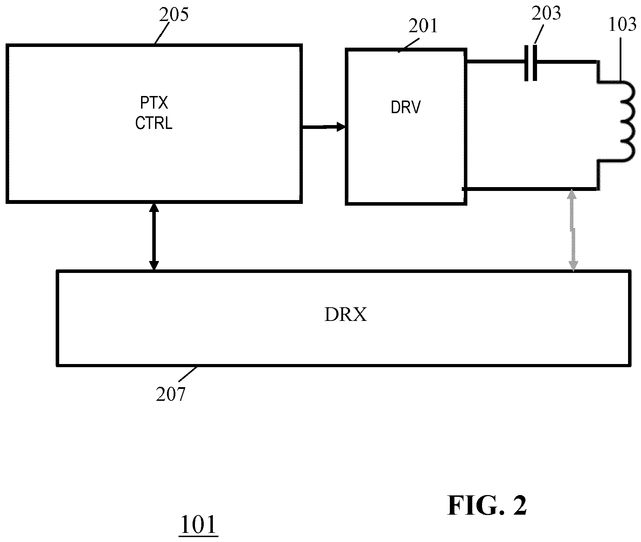

Fig. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

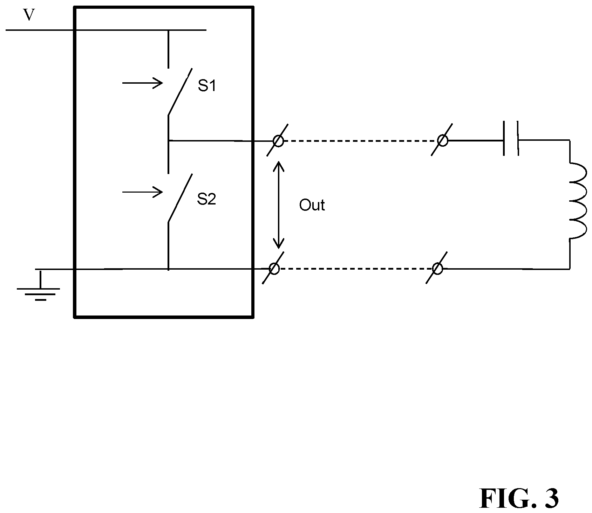

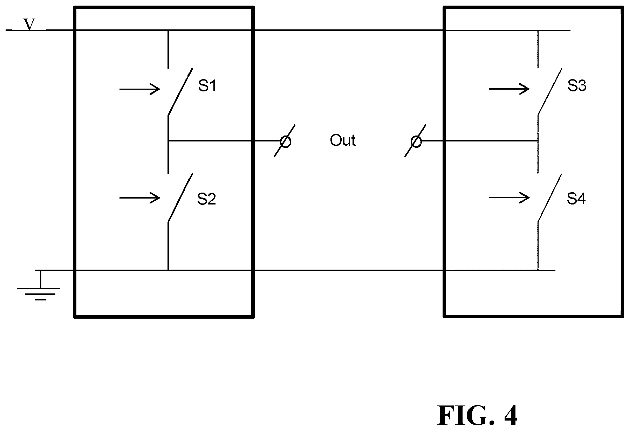

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

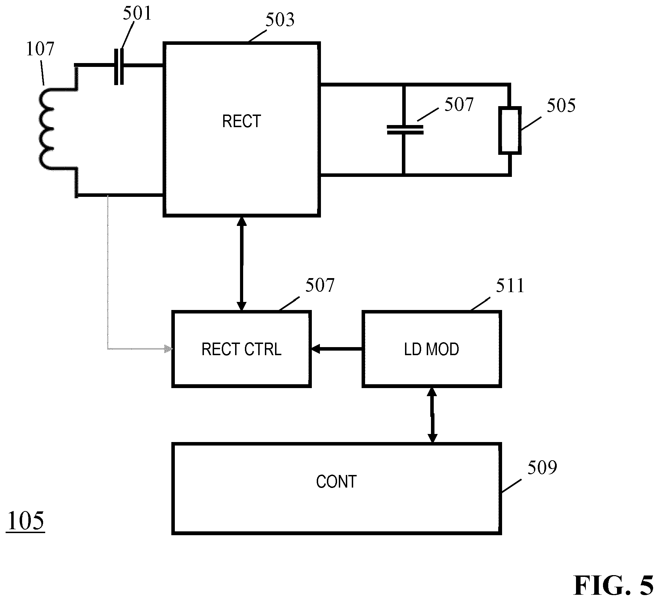

FIG. 5 illustrates some exemplary elements of the power receiver 105.

The power receiver 105 comprises an input circuit which is arranged to extract power from the power transfer signal to generate an induced power signal. The input circuit includes a receiver coil 107 arranged to extract power from the power transfer signal by induction, i.e. the magnetic field of the power transfer signal induces a signal in the receiver coil. In the example, the receiver coil 107 is coupled to a capacitor 501 which together with the receiver coil 107 forms an input resonance circuit. Thus, the input circuit may be a resonance circuit and the power transfer may be a resonant power transfer between resonance circuits. In other embodiments, only one, or none, of the power receiver and the power transmitter may utilize a resonance circuit for power transfer.

The input circuit is coupled to a rectifier (circuit) 503 which comprises an input that is coupled to the input circuit 107, 501 and which receives the induced power signal. The induced power signal is an AC signal (corresponding to the electromagnetic power transfer signal). The rectifier circuit 503 has an output which provides a rectified power signal. The rectified power signal is fed to a load 505.

The load 505 represents the target load for the power transfer. The load 505 may for example be an external device, a battery or charging function, etc. The load 505 may also represent the loading by internal circuitry, such as control, support, and auxiliary circuits supporting the power transfer.

In the example, the power path of the power receiver 105 also comprises a smoothing capacitor 507 which is arranged to smooth the rectified power signal. As a consequence, the power receiver 105 may provide a smoothed DC voltage to the load.

It will be appreciated that in some embodiments, the power path may include other functions and circuits such as a voltage regulator, a DC/DC convertor etc. as will be known to the skilled person.

A well-known conventional approach for rectifying an AC signal is to use a diode or a plurality of diodes coupled in a bridge arrangement. However, such a passive approach has the disadvantage that it introduces a power loss which may be quite substantial in some cases. Indeed, the forward voltage drop over a conducting diode tends to be quite high (often in the range around 0.4V-07V) and for high currents, a substantial power loss may result. This not only reduces efficiency but may also often result in thermal problems as the dissipated power may result in a substantial local heating of the diodes.

In the power receiver of FIG. 5, the rectifier circuit 503 includes one or more switch elements that are switched to provide rectification of the input AC induced power signal to provide a rectified power signal on the output of the rectifier circuit 503. The switch elements may be controlled to be synchronized with the cycles of the AC induced power signal such that they conduct at time intervals that result in the current and voltage at the output of the rectifier circuit 503 being a rectified voltage and current, and with the output voltage having only one polarity and current flowing only in one direction.

The rectifier circuit 503 of FIG. 5 is coupled to a rectifier controller 507 which is arranged to generate one or more switch control signals with each switch control signal controlling one switch element of the rectifier circuit 503. The rectifier controller 507 is arranged to generate the switch control signal(s) in dependence on the induced power signal such that the corresponding switch elements rectify the current. Specifically, the switch signals may be generated such that the current flowing through the individual switch element flows in only one direction.

As a low complexity example, the rectifier circuit 503 may comprise a single switch element which forms a connection from one input connector to one output connector and with a second input connector being coupled directly to the second output connector. The switch control signal for the switch element may then be generated to only switch the switch element on whenever the voltage of the input connector is higher than the voltage of the first output connector (with the voltages being relative to the common second input and output connectors).

The rectifier circuit 503 may specifically be arranged to generate the switch control signal for a switch element in dependence on the induced power signal such that it switches the switch element to the conductive mode only for current flowing through the switch element in one direction during an AC cycle of the induced power signal.

The rectifier circuit 503 may be arranged to generate the switch control signal to be synchronized with the induced power signal and specifically may be arranged to switch the switch element to the conductive mode (also referred to as switching the switch element on) for at least part of the time in which the current through the switch element will flow in the desired direction, and to switch the switch element to the non-conductive mode (also referred to as switching the switch element off) during the time in which current would flow in the opposite direction if the switch element were on. In many embodiments, the rectifier circuit 503 may be arranged to generate the switch control signal to be synchronized with the induced power signal such that it is arranged to switch the switch element to the conductive mode for at least part of the time in which the voltage over the switch element has a desired polarity, and to switch the switch element to the non-conductive mode during the time in which the voltage has the opposite polarity.

In many embodiments, the rectifier circuit 503 may comprise a plurality of rectifying elements, such as specifically a half or full bridge rectifier configuration comprising typically two or four rectifiers respectively.

The approach may also be referred to as a synchronous rectifier and it may reduce the power loss and dissipation in the receiver substantially. In particular, the voltage drop over the switch element when conducting may typically be substantially lower than a passive diode voltage drop thereby resulting in a substantially reduced power loss, and thus improved efficiency and reduced thermal heating.

In addition, the power receiver controller 509 may include various power receiver controller functionality required to perform power transfer, and in particular functions required to perform power transfer in accordance with the Qi Specifications.

The power receiver 105 is arranged to transmit data to the power transmitter 101. Such data may specifically include power control loop error messages used to implement a feedback power loop for controlling the power level of the power transfer signal during power transfer as will be known to the skilled person. The power receiver may in many embodiments be capable of transmitting a range of different messages serving different purposes as known to the skilled person. For example, a range of different messages such as those specified in the Qi Specifications may be transmitted. Messages may comprise one or more data bits/ symbols.

The power receiver is arranged to transmit messages to the power transmitter using load modulation.

As will be well known to the skilled person, for load modulation, changes in the loading of the power transfer signal may be introduced by the power receiver where the changes are in accordance with data values to be transmitted. These changes can then be detected by the power transmitter in order to decode the data from the power receiver.

Load modulation may be used as the method for the power receiver to communicate control messages, or other data, to the power transmitter in accordance with e.g. the Qi wireless power standard.

An often used approach for load modulation is to change a property of the input circuit to change the load of the power transfer signal. There are two main ways of doing so, namely either to directly change a resistive load applied to the input circuit and/or to detune the resonance of the input circuit e.g. by changing a reactive loading of the input circuit (typically switching a capacitor in/out in line with data to be transmitted). The former approach of varying a real value (ohmic) load is considered to provide more robust performance than varying a reactive load as in the latter case. However, using a dedicated load resistor not only requires additional circuitry in the form of the resistive load and the associated switch but also introduces additional loss and corresponding thermal heating.

Another approach which has accordingly been proposed is to directly vary the loading of the target load to which the power path provides power. This may often be considered a better option for applying real valued load modulation as the power receiver controls the modulation current and therefore can adjust it as desired. It also reduces thermal losses in the receiver as the modulation load is part of the target load.

However, as such a load variation occur after the rectifier and any smoothing function of the power path, the load variations will tend to be attenuated. For example, if the load 505 is varied in accordance with the load modulation, the variation will be strongly attenuated by the smoothing capacitor 507. The attenuation may be significant and will tend to increase the faster the modulation frequency is. Indeed, in many scenarios, the load variations may have a frequency which is of the same order of magnitude as the switch frequency which the smoothing capacitor is seeking to compensate and thus a substantially attenuation of load variations may result.

As will be described later, the power receiver of FIG. 5 uses an approach that may often mitigate or reduce such issues.

At the power transmitter, detection approaches such as those known for Qi Specification systems may be used to detect the load variations. For example, a direct measurement of a power level or current amplitude of the drive signal may be used as indications of the loading, and thus of the load modulation variations introduced by the power receiver.

The power receiver 105 comprises a load modulator 511 which is arranged to transmit data to the power transmitter 101 by load modulating the power transfer signal. The load modulator 511 is arranged to perform the load modulation by controlling the switching of one or more switch elements of the rectifier circuit 503. The load modulator 511 is specifically arranged to generate a load modulation signal which represents the load variations/ levels that represent the data symbols that are to be transmitted. The load modulation signal may for example be a series of load values represented by data values, and specifically may be a series of binary values with each possible value corresponding to one modulation load value.

The load modulation signal is fed to the rectifier controller 507 which then proceeds to adapt the switch control signal for at least one switch element of the rectifier circuit 503 in dependence on the load modulation signal. Thus, the switching of one or more switch elements is modified and specifically is adapted to be different for different modulation load values.

The load modulator 511 may be coupled to the power receiver controller 501 and may be arranged to receive data from the power receiver controller 501 for transmission to the power transmitter.

For example, the load modulator 511 may receive power error control data from the power receiver controller 501 and may transmit corresponding power error control messages to the power transmitter 101 using load modulation. In operation, the system is typically arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

In some embodiments, the load modulator 511 is arranged to transmit a given data symbol by controlling the modulation load of the power transfer signal to a given value associated with the specific data symbol value. For example, for a binary communication, the load modulation signal may have two different values and the rectifier controller 507 may be arranged to switch between two switch control settings depending on whether the load modulation signal is set to the first or second value. In some embodiments, the modulation may be a bi-phase modulation which may represent each data symbol with a single transition and with the direction of the transition indicating the binary data symbol value.

However, in many embodiments, the load modulator 511 is arranged to transmit data symbols by load modulating the power transfer signal by a sequence of modulation load values corresponding to a chip sequence. The load modulator 511 may transmit the data symbols using an approach that e.g. similarly to a Direct Sequence Spread Spectrum (DSSS) uses a chip sequence to modulate the data symbols. The data symbols/ bits are modulated by a (typically pseudorandom) bit sequence also referred to as a spreading sequence. Each spreading-sequence bit, which is known as a chip, has a much shorter duration (larger bandwidth) than the original message bits.

In the approach, load modulation is employed, but each symbol is represented by a chip sequence comprising a plurality of chips, and typically with a sequence comprising 10 to 1023 chips. Thus, rather than simply varying the load in accordance with each symbol or bit, the load modulator 511 is arranged to transmit/represent a given symbol (typically a bit) by a series of load changes and variations where the changes and variations are different for each symbol. Specifically, a chip sequence may be defined for each symbol and when transmitting a given symbol, the load modulator 511 may retrieve the chip sequence for that specific symbol and proceed to generate the load modulation signal in accordance with the chip sequence for the symbol.

Similarly, as will be described in more detail later, the power transmitter may detect the load modulation by considering the whole chip sequence, and specifically may seek to determine the received symbol as the one for which the measured load variation chip pattern most closely matches the chip sequence pattern for that symbol. In response, the rectifier controller 507 will proceed to apply the corresponding load variation to the power transfer signal.

Such an approach may in particular allow the modulation depth, i.e. the magnitude of the load variations to be reduced substantially which may for example reduce electromagnetic noise and interference, may reduce acoustic noise, and may reduce spurious oscillations. It may also in many embodiments result in improved signal to noise ratios and may result in a substantially improved and often more reliable communication with e.g. often a lower bit error rate. Thus, a general overall improved power transfer can be achieved.

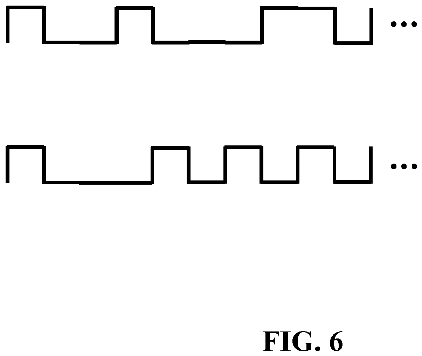

Conventionally, such communication uses binary sequences such as e.g. the exemplary chip sequences illustrated in FIG. 6 illustrates an example of parts of two possible chip sequences. Each chip sequence comprises a sequence of chips. Conventionally, the set of chip values is two, corresponding to a binary chip sequence. However, in some embodiments a(t least one) modulation chip sequence may have non-binary chip levels. For example, the chips may have one of three different chip levels, and the chip sequence includes three different chip levels.

The following description will focus on a DSSS modulation approach where each symbol time is divided into a plurality of chip intervals with the chip sequences of the chips being different for different data symbols. Typically, each sequence includes at least ten chips, and often substantially more. In many embodiments, each chip sequence may have a length of 2^{N}-1 where N is an integer of typically no less than 4.

Each possible data symbol value may be linked/ represented by one modulation chip sequence. Thus, for a given data symbol value to be transmitted, the corresponding/ linked modulation chip sequence is determined and modulated on to the power transfer signal by load modulation. For example, where only two data symbols are possible, i.e. where a binary communication is implemented, the set of chip sequences may comprise only two chip sequences.

In many embodiments, the one or more chip sequences may be represented by a relationship to another chip sequence. For example, for binary communication, the load modulator 511 may store a single modulation chip sequence corresponding to one of the binary data values. The chip sequence for the other binary data value may be represented by the same stored bit sequence as it may be given as the inverse of the stored bit sequence. Thus, often the set of chip sequences utilizes complementary inverse chip sequences for pairs of data symbols and therefore only half of the used chip sequences are typically explicitly stored/ determined in the load modulator 511 with the remaining chip sequences being automatically and implicitly stored/ determined as the inverse of these.

Thus, in some embodiments, the modulation chip sequences may include inverse chip sequences. Equivalently, the same modulation chip sequence can be considered to represent two data symbol values, and specifically two binary data symbol values.

The modulation chip sequence is for a given data symbol to be transmitted selected from a set of modulation chip sequences, and in the example the load modulator 511 provides a set of modulation chip sequences with each chip sequence being linked to a data symbol value. Typically, the set of modulation chip sequences comprises a chip sequence for each possible data symbol value. For example, if binary communication is used, the first set of chip sequences may comprise only two chip sequences. It will be appreciated that the load modulator 511 may store the chip sequences in any suitable form and does not need to store a full sequence for each possible data symbol. For example, a given modulation chip sequence may be multiplied by a binary symbol value represented by the values 1, -1. At the receiving end, i.e. that the power transmitter, the data value may then be determined by a correlation with the given modulation chip sequence and a determination of the corresponding binary data value dependent on whether this is a positive or negative correlation.

In many embodiments, binary communication may accordingly be used where only two data symbol values are possible (corresponding to a "0" bit value or a "1" bit value). In such cases, one bit value may be represented by a given chip sequence and the other bit value may be associated with the inverse bit sequence, i.e. the bit sequence that results from changing each chip value to the opposite value. The two bit sequences are thus typically complementary with one resulting from the other by multiplication by -1 (with the chip values being represented by +1 and -1).

A particular advantage in such a case is that demodulation is particularly easy as a single correlation can be used to differentiate between bit values as the magnitude of the correlation is the same for the chip sequences, but the signs of the correlation values are opposite.

It will be appreciated that it is equivalent to consider data symbols represented by inverse modulation chip sequences to be represented by one chip sequence or by two chip sequences. It will be appreciated that such a binary approach with two inverse chip sequences being used is equivalent to considering that the two possible binary values are modulated by the same chip sequence but with the data symbols having opposite data values (e.g. +1 and -1).

When the power receiver 105 is about to transmit a data symbol, the value is fed to the load modulator 511 from the power receiver controller 509 which proceeds to determine the chip sequence that is linked to the data symbol value to be transmitted. The load modulator 511 then generates a load modulation signal representing the chip sequence and the rectifier controller 507 then modulates this sequence onto the power transfer signal.

The chip sequences in the set are typically (but not necessarily) of the same length. For binary communication, the set of chip sequences may as mentioned include only a single modulation chip sequence (or equivalently two inverse chip sequences).

The power transmitter 101 comprises a data receiver 207 which is arranged to sense the load variations of the power transfer signal and to decode/demodulate the load modulation of the power transfer signal as will be known to the skilled person. Specifically, the data receiver 207 may correlate the measured load variations with locally stored replicas of the chip sequences for the different data symbols and determine the received data symbol as the one for which the largest correlation is determined.

Load modulation may provide advantageous operation in many systems and applications and tends to provide reliable and low complexity operation suitable for power transfer systems where a power transfer signal is generated for the purpose of transferring power. The reuse of the power transfer signal as a communication carrier may typically reduce complexity and require less circuitry thereby reducing cost. The Qi Specifications were originally implemented with unilateral communication from the power receiver to the power transmitter by using a load modulation with a modulation symbol shape that allowed easy differentiation between binary data values.

However, as previously described, practical applications for varying the load have some disadvantages. In particular, chip sequency based modulation tends to require load variations at a high frequency as a fast chip rate is required in order to provide sufficiently fast symbol rate (for a given chip sequence length). However, this may even prevent that the conventional approach of varying the target load to provide load modulation can be used. Often the chip rate will be so close to the power transfer signal switch frequency that the smoothing applied to the power transfer signal frequency will substantially attenuate the load variation imposed by the target load. Indeed, typically the chip rate is only two to eight times lower than the power transfer signal frequency (specifically to maintain a relatively high throughput).

In the approach of FIG. 5, the rectifier controller 507 is arranged to adapt the switch control signal in response to the load modulation signal. Specifically, the rectifier controller 507 may be arranged to change the rules/algorithms/control of the switch control signal, and thus of the switch element. Specifically, the rectifier controller 507 may be arranged to apply a criterion for generating the switch control signal to switch the switch element from the non-conductive mode to the conductive mode and/or a criterion for generating the switch control signal to switch the switch element from the conductive mode to the non-conductive mode. The rectifier controller 507 may then be arranged to change one or both of these criteria dependent on the load modulation signal. For example, a different parameter, such as e.g. a switch threshold, may be dependent on the value of the load modulation signal.

In many embodiments, the rectifier controller 507 may be arranged to change a criterion for changing the switch control signal between a value setting the switch in the conductive mode and a value setting the switch in the non-conductive mode in dependence on the load modulation signal.

In many embodiments, the load modulator 511 may be arranged to generate the load modulation signal to have a set of values with each of the values representing a different modulation load, in particular the load modulation signal may be generated to have a set of binary values with each binary value corresponding to a different criterion for each value of the load modulation signal (changing the parameter, such as a decision threshold, may be considered to be applying a different criterion).

The rectifier controller 507 may be arranged to generate the switch control signal such that the current through the corresponding switch element flows only in the desired direction and thus the switch control signal controls the switch element to only be on (in the conductive mode) for a part of the AC cycle of the induced power signal and to be off (in the non-conductive mode) during the remaining part of the AC cycle. The time interval in which the switch element is on is such that current only flows in the desired direction and such that the voltage over the switch element has a polarity such that the current flows in this direction.

The rectifier controller 507 may be arranged to generate the switch control signal by synchronizing it to the AC cycle of the induced power signal, and thus a repeating switch control signal may be generated that switches the switch element on for a suitable time interval of the AC cycle. In some embodiments, the rectifier controller 507 may for example generate the switch control signal to switch the switch element on and off with a given time offset to the AC cycle (e.g. a given time offset to a duty cycle).

As another example, the rectifier controller 507 may alternatively or additionally control a time for switching the switch element on or off in response to a voltage over the switch element. For example, the rectifier controller 507 may measure the voltage over the switch element and switch it on when the magnitude of the voltage exceeds a given threshold voltage and has a given desired polarity. Similarly, the rectifier controller 507 may be arranged to switch the switch element off when the magnitude of the voltage falls below a given threshold voltage (and has a given desired polarity). For example, the voltage over the switch element may be measured and may be switched on when the voltage increases above a first threshold and may be switched off when it falls below a second threshold. The first and second thresholds may be the same in some scenarios or may in many cases be different. Further, a threshold may in some situations be zero.

It will be appreciated that such approaches may be combined, e.g. the switch element may be switched on when the voltage drop across the switch element exceeds a threshold and then switched off when the induced power signal has a zero crossing.

Such approaches may provide a rectification of the induced power signal to generate a rectified signal.

The rectifier controller 507 may in the power receiver of FIG. 5 further be arranged to adapt the switch control signal dependent on the load modulation signal such that the switching is dependent on the load modulation signal, and thus on the modulation load to be applied to the power transfer signal. The rectifier controller 507 may accordingly be arranged to modify the switch control signal by changing the criteria for switching the switch element on and off. For example, the time offset between switching on and/or off of the switch element and the AC cycle timing (e.g. a time of a zero crossing) may be dependent on the load modulation signal such that different values are used for different values of the load modulation signal. Alternatively or additionally, the voltage threshold for switching the switch element on or off may be changed.

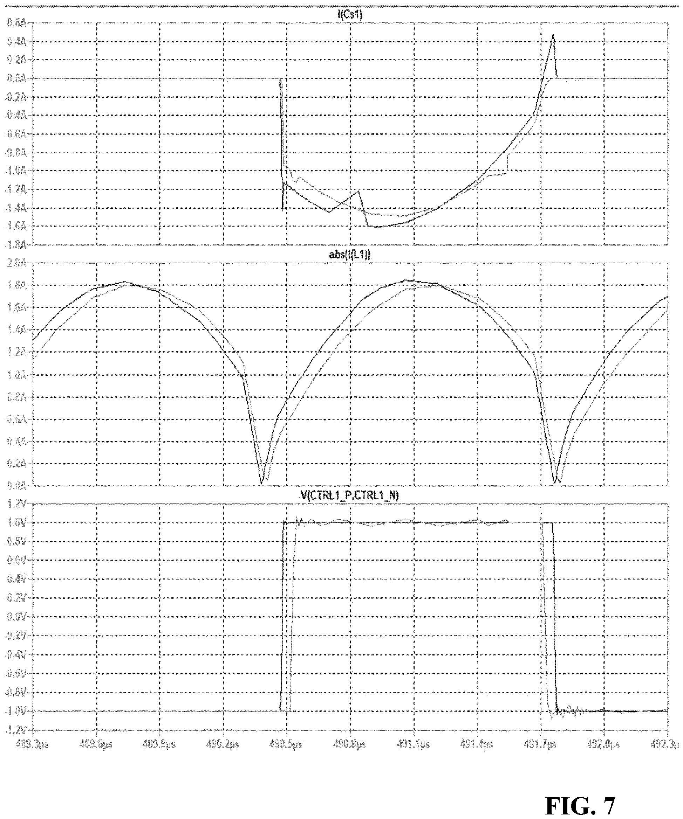

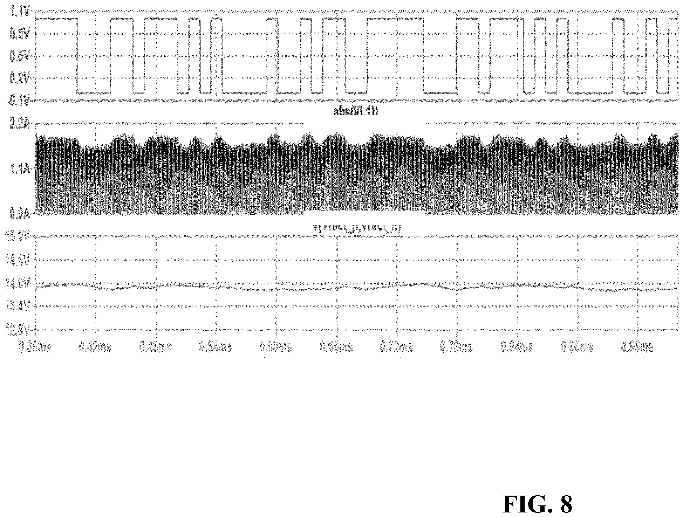

In many embodiments, the duty cycle of the switch element(s) may accordingly be modified depending on the load modulation signal and the modulation load to apply to the power transfer signal. Changing the duty cycle, and more generally changing when the switch element is on will modify the load of the power transfer signal thereby providing a load modulation that can be detected by the power transmitter. This may be illustrated by FIG. 7 which illustrates the current through the transmitter coil 103, the current through a switch element of the rectifier circuit 503, and a switch control signal for two different duty cycles. As can be seen, the transmitter coil 103 current differs for the different duty cycles thereby allowing the load modulation to be detected. FIG. 8 illustrates an example of a load modulation signal representing a chip sequence, the resulting transmitter coil 103 current resulting from a corresponding change of duty cycle for the rectifier switch element, and the voltage over the load 505. As can be seen, the load modulation is clearly present and detectable in the transmitter coil current while the voltage to the load remains substantially constant.

The described approach may provide advantageous operation and performance in many scenarios. It may in particular mitigate or reduce some of the disadvantages associated with performing load modulation by switching in a load at the input circuit. In particular, it may allow for a real load variation to be imposed while reducing the associated power loss and thus may often result in improved efficiency and/or improved thermal operation. Further, in contrast to load modulation by varying the target load, the load variation imposed by the control of the rectifier circuit 503 is not attenuated by the power path or in particular by the smoothing capacitor and/or by any DC/DC converter type function. The approach may further be implemented with low complexity in many embodiments. It may typically be implemented without requiring additional components to be introduced and may often reduce cost.

A particular advantage of the approach is further that it may allow a very easy, and often automatic, synchronization of the load modulation to the induced power signal, and thus to the power transfer signal. This may be highly advantageous in many embodiments and may improve communication performance. In particular, for chip sequence based communication, the load modulation and chip sequences are often synchronized to the power transfer signal in order to improve and facilitate detection at the power transmitter. For example (differential) DSSS modulation may typically be applied every e.g. second or fourth zero crossing of the power transfer signal, and this synchronization is relied upon by the power transmitter to provide improved communication performance. Such synchronization is in the power receiver of FIG. 5 easily achieved by controlling the rectifier circuit 503 synchronously with the induced power signal, and indeed in many embodiments, the same functionality may effectively provide both synchronization of the rectification and the load modulation as well as allowing the power signal frequency to be determined.

In many embodiments, the switch element(s) of the rectifier circuit 503 may specifically be Field Effect Transistor(s), FET(s), and specifically may be Metal Oxide Semiconductor FET(s), MOSFET(s). A particular advantage of using FETs is that they inherently comprise a body diode which can advantageously and effectively be used in the described approach, and which in particular effectively can be controlled to provide efficient load modulation.

FETs are further highly suited for synchronous rectifiers as they have very low power dissipation and tend to provide an efficient and easy way to control switching. Thus, using FETs to provide synchronous rectification may ensure a high system efficiency and reduce the losses created by the forward breakdown voltage and ohmic losses in the diodes. In a synchronous rectifier, conventional diodes may accordingly be substituted by FETs which are controlled to switch at appropriate times to provide rectification.

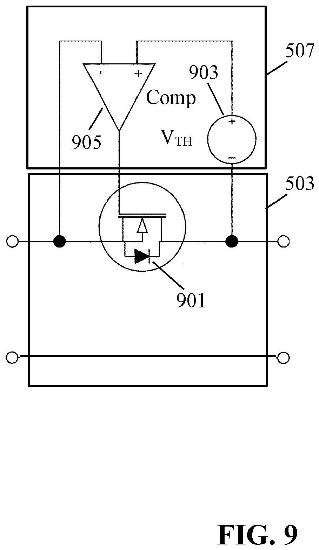

In some embodiments, the synchronous rectification may be based on detection of the conductivity due to body diode inside the FET. For example, an approach similar to that of FIG. 9 may be employed where a FET is coupled directly between an input connector (the source) and an output connector (the drain) of the rectifier circuit 503. In this case the body diode 901 may begin to conduct when the voltage applied between the source and drain exceeds the body diode's forward breakdown voltage. When (sufficient) current through the body diode 901 is detected, the FET may be switched to the on state (conductive mode) by the rectifier controller 507 by setting the gate voltage to a given value that switches the channel to the conductive state. Thus, the switch control signal may be applied directly to the gate and may be generated in response to measurements of current through the FET and specifically through the body diode when the FET is in the off state. Thus, the switch control signal may be generated to switch the FET on when the current through the body diode exceeds a given value.

The rectifier controller 507 may further be arranged to switch the FET off (into the non-conductive mode) when the current through the FET drops to a given level (typically very small). Thus, in this way the FET may be controlled to provide synchronous rectification.

In the specific example of FIG. 9, the control of the FET is based on the voltage across the FET, and specifically the voltage drop from the source to the drain of the FET. Specifically, the FET is switched on when the voltage drop from the source to the drain increases above a given threshold V_{TH} and it is switched off when the voltage drop from the source to the drain decreases below the given threshold V_{TH}. The specific operation is in FIG. 9 represented by a voltage offset 903 and a comparator 905 but it will be appreciated that the approach may be implemented in other ways, including often as part of a control program running on a microcontroller or other processing platform.

It will also be appreciated that as there is a direct relationship between the source to drain voltage and the current flow from source to drain, the measurement of a drain source voltage may also be considered a measurement of a drain source current and vice versa. In the case of the FET being in the non-conductive mode, the relationship is given by the characteristic of the body diode, and in the case of the FET being in the conductive mode, the relationship is given by the resistance of the conducting channel (which may be dependent on the gate source voltage).

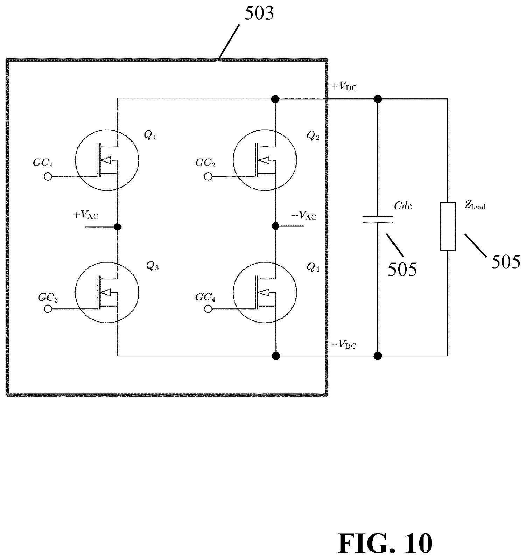

In the example of FIG. 9, the rectifier circuit 503 comprises a single FET/switch element and indeed the only rectification element is the FET/switch element. In the example, the rectified output signal from the rectifier will thus typically be a half-wave rectifier (or indeed less than half-wave rectifier, e.g. for some values of the load modulation signal). In some embodiments, the rectifier circuit 503 may include a full-wave rectifier (or at least more than a half-wave rectifier) by including more than one rectifier element. For example, additional rectifier elements may be used in a rectifier bridge configuration. In such cases, the other rectifier elements may be passive rectifiers such as diodes or may indeed be other switch elements that are operated to provide rectification. For example, all rectifiers may be FETs/switch elements such as the FET/switch element of FIG. 9. For example, the rectifier circuit 503 may comprise a full bridge rectifier with all rectifier elements being FETs as illustrated in FIG. 10. In some embodiments, all of these FETs may be driven as disclosed for the FET in the example of FIG. 9.

In the example of FIG 9 (as indeed mutatis mutandis for examples using more switch elements), the rectifier controller 507 may be arranged to vary the switch control signal for the FET in response to the load modulation signal by changing one of the parameters used in the criteria for respectively switching the FET on or off. For example, the current threshold for the current through the body diode 901 to switch the FET on may be modified and/or the current through the channel for which the FET is switched off may be changed. In the specific example of FIG. 9, the threshold voltage V_{TH} may be a function of the load modulation signal. For example, for a binary load modulation, the rectifier controller 507 may switch between two different sets of threshold values depending on the binary value of the load modulation signal.

In the example, the FET is an N-channel FET which is configured to operate with positive source to drain voltage, and thus a negative drain to source voltage, when conducting current (whether through the channel or through the body diode). Thus, the N-channel FET is configured to operate with a negative drain to source voltage, rather than the conventional approach of operating N-channel FETs with positive drain to source voltage, for at least part of a time interval of a cycle of the induced power signal in which the switch control signal sets the switch in the conductive mode. The operation of the N-channel FET in this way provides particular advantages in allowing the body diode to be effectively used to provide rectification (similar to a diode in a conventional passive rectification).

In the specific approach, the FETs may thus be able to provide rectified current either in an active way by the switch control signal switching the FET into the conductive mode with current flowing from the source to the drain through the channel, or in a passive mode when the current is flowing from the source to the drain through the body diode. In many practical embodiments, the synchronous rectifier may be operated in the passive (diode conduction) mode when the power transfer is low and thus the induced power signal has a low power level (and thus the current through the rectifier circuit 503 is low) and switch to the active (FET conduction mode) when the power transfer level increases. For example, the passive mode may be used when the power level is too low to power the internal control circuits and the active mode may be used when the power level is sufficient to power the control circuits.

Further, the load of the power transfer signal will be different when the FETs are operated in respectively the passive and in the active mode and this may be exploited by the rectifier controller 507 when adapting the load and operation based on the load modulation signal. For example, in some embodiments, the rectifier controller 507 may switch between the passive and active switch mode for at least one FET dependent on the load modulation signal. Thus, depending on the load modulation signal, the rectifier controller 507 may control the FET rectifier element to either provide rectification by the switch control signal switching the switch between the conductive and non-conductive modes during an AC cycle of the induced power signal, or may control the switch control signal to not switch the FET on such that it operates in the passive mode in which the FET is maintained in the non-conductive mode throughout the AC cycle and rectification is performed by a body diode of the FET.

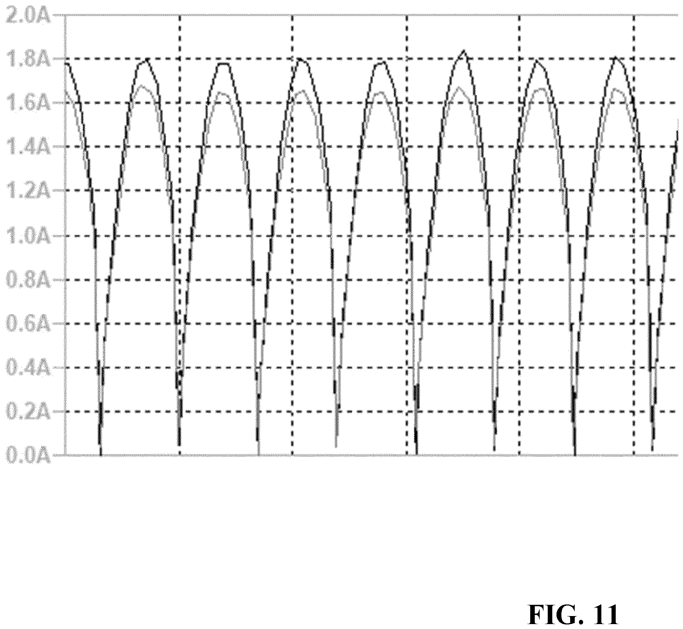

The rectifier mode (active/passive) influences the power transfer signal loading and this is reflected to the power transmitter side as different receiver impedances. FIG. 11 shows an example of a difference in the transmitter coil current at the same transmitter operating point with the rectifier conducting in passive (diode) mode, and in active (FET conducting) mode. As explained above, the FET switching on may remove the diode's forward breakdown voltage and ohmic losses, boosting the rectification efficiency. This results in an increase of the transmitter coil current when the rectifier is in active mode compared to passive mode and this can be detected by the data receiver 207.

In some embodiments, the rectifier controller 507 may be arranged to determine an operating point for the power transfer and to adapt the switch control signal in dependence on the operating point. Specifically, the power level of the power transfer may be determined, and the load switch control signal may be adapted accordingly, and in particular the variation dependent on the load modulation signal may be adapted dependent on the operating point/ power transfer power level.

For example, the rectifier controller 507 may estimate one or multiple parameters of the power transfer, such as current through the rectifier, and the rectified DC voltage level, and it vary the duty cycle of load modulation signal respectively. E.g. in many embodiments, the change in the load modulation variations for different modulation levels may be increased for an increasing power level and decreased for decreasing power levels. Thus, effectively, the modulation depth may be increased for an increasing power level. This may compensate for it being more difficult to detect smaller relative load variations by e.g. keeping the relative modulation depth fixed for different power levels (or at least reducing the variation in the relative modulation depth for varying load levels).

As a specific example, the rectifier controller 507 may limit the total time of the FET operating in the passive mode at the particular current flowing through the rectifier by reducing the duty cycle of load modulation when the current flowing through the rectifier increases.

As previously mentioned, in many embodiments, the rectifier circuit 503 may include a plurality of switch elements and the rectifier controller is arranged to generate a switch control signal for each of the switch elements (or at least for some of these).

In such cases, the rectifier controller 507 may be arranged to only adapt a subset of the switch control signals in dependence on the load modulation signal. For example, in a bridge configuration such as in the example of FIG. 10, the rectifier controller 507 may be arranged to switch three of the FETs to operate as half wave rectifiers by controlling their switch control signals to be synchronous with the induced power signal. For example, for three of the FETs, the switch control signal may be switched on whenever the source to drain voltage is negative. However, for the fourth FET, the switch control signal may additionally be dependent on the load modulation signal. For example, the rectifier controller 507 may for this FET for one load modulation signal value operate in exactly the same way as for the other FETs, such as e.g. switching it on whenever the source to drain voltage is negative. However, for another value of the load modulation signal, the rectifier controller 507 may use a different criterion for switching the FET on thereby changing the duty cycle and the loading of the power transfer signal. In particular, the rectifier controller 507 may for such a second value proceed to generate the switch control signal to not switch the FET on, and thus for this second modulation value, the FET is operated in the passive mode with rectification being provided by the body diode only.

Controlling only a subset of the FETs to provide the load modulation may provide advantages in many embodiments. In particular, in many embodiments it may reduce the power loss associated with load modulation, such as e.g. when using the passive mode. For example, by only setting one FET in the passive mode for the second modulation value, the diode voltage drop, and associated power loss, is only incurred by one FET whereas the other FETs do not incur the same power loss and power dissipation. This may for example be significant in cases where the power loss is so high that thermal issues may be significant and require dedicated cooling as this can be selectively applied to only the FET that does experience the power loss (e.g. only one FET may need a heatsink).

In some embodiments, only a subset of the FETs may be switched dependent on the load modulation signal, and specifically only one FET may potentially be in the passive mode at a time, but with the subset being dynamically changed. For example, the subset may be changed at a rate that is no less than 1Hz, and this the subset may change at an interval not exceeding one second.

As a specific example, the subset may include only a single FET such that only one FET may be set in the passive mode at a time. However, which FET is entered in the passive mode in response to the load modulation signal may be dynamically changed. Such an approach may result in the power dissipation and thus heating being distributed and averaged over a plurality, and typically all, of the FETs. The power loss in each FET, and thus the thermal operating point and heating, may be reduced. This may be advantageous in many scenarios, e.g. if it results in no dedicated cooling being required.

Indeed, keeping the rectifier in the passive mode while conducting significant current may have negative consequences for a chip die implementing the FETs. To reduce residual heat influence, the ratio between passive and active conductivity can be adjusted. Another way to improve the thermal performance is to change the modulating FET, e.g. every time the data sequence needs passive conductivity, e.g., when transmitting a sequence of symbols, the first '1' value is achieved by modifying the control threshold of FET Q1, the second '1' value by modifying the threshold of FET Q2, etc.

A modulation load may be a load component of the loading of the power transfer signal/ drive signal caused by/ depending on/ varying with the load modulation.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power receiver (105) for wirelessly receiving power from a power transmitter (101) via an electromagnetic power transfer signal, the power receiver (105) comprising:
an input circuit (107, 501) comprising a receiver coil (107) arranged to extract power from the power transfer signal to generate an induced power signal;
a rectifier circuit (503) having an input coupled to the input circuit (107, 501) and an output coupled to a power load (505), the rectifier circuit (503) being arranged to rectify the induced power signal and comprising at least one switch element arranged to switch a path from the input to the output between a conductive mode and a non-conductive mode in response to a switch control signal;
a rectifier controller (507) arranged to generate the switch control signal in dependence on the induced power signal;
a load modulator (511) arranged to receive data for communication to the power transmitter (101) and to generate a load modulation signal indicative of load variations representing the data; and
wherein the rectifier controller (507) is further arranged to adapt the switch control signal in dependence on the load modulation signal.

2. The power receiver of claim 1 wherein the rectifier controller (507) is arranged to generate the switch control signal in dependence on a voltage over the switch element.

3. The power receiver of claim 1 or 2 wherein the rectifier controller (507) is arranged to control the switch control signal to switch the switch element from the non-conductive mode to the conductive mode in response to a detection that a voltage over the switch element exceeds a threshold.

4. The power receiver of claim 3 wherein the rectifier controller (507) is arranged to adapt the threshold in response to the load modulation signal.

5. The power receiver of any previous claim wherein the rectifier controller (507) is arranged to adapt a duration of a time interval in each cycle of the induced power signal during which the switch control signal sets the switch element in the conductive mode in dependence on the load modulation signal.

6. The power receiver of any previous claim wherein the switch element is a Field Effect Transistor, FET.

7. The power receiver of any previous claim wherein the switch element is an N-channel FET configured to operate with a negative drain source voltage for at least part of a time interval of a cycle of the induced power signal in which the switch control signal sets the switch in the conductive mode.

8. The power receiver of any of claims 6 and 7 in which the rectifier controller (507) is arranged to switch between an active switch mode in which the switch control signal switches the switch between the conductive mode and the non-conductive mode during a cycle of the induced power signal, and a passive mode in which the FET is maintained in the non-conductive mode throughout the cycle and rectification is performed by a body diode of the FET.

9. The power receiver of any of the previous claims 6-8 wherein the rectifier circuit (503) comprises a current measurer for measuring a current through a body diode of the FET when the FET is in the non-conductive mode and the rectifier circuit (503) is arranged to control the switch control signal to switch the FET to the conductive mode in response to a detection that the current through the body diode exceeds a threshold.

10. The power receiver of any previous claim wherein the rectifier controller (507) is arranged to determine an operating point for the power transfer and to adapt the switch control signal in dependence on the operating point.

11. The power receiver of any previous claim wherein the load modulator (511) is arranged to generate the load modulation signal with each data symbol being modulated by a sequence of modulation load values corresponding to a chip sequence of a set of modulation chip sequences, chip sequences of the set of chip sequences being linked to different data symbol values.

12. The power receiver of any previous claim wherein the rectifier circuit (503) comprises a plurality of switch elements and the rectifier controller (507) is arranged to generate a switch control signal for at least some of the plurality of switch elements.

13. The power receiver of claim 12 wherein the rectifier controller (507) is arranged to adapt only a subset of the switch control signals in dependence on the load modulation signal.

14. The power receiver of claim 13 wherein the rectifier controller (507) is arranged to change the subset with an interval not exceeding 1 second.

15. A method of operation for a power receiver (105) wirelessly receiving power from a power transmitter (101) via an electromagnetic power transfer signal, the method comprising:
an input circuit (107, 501) comprising a receiver coil (107) extracting power from the power transfer signal to generate an induced power signal;
a rectifier circuit (503) having an input coupled to the input circuit (107, 501) and an output coupled to a power load (505) and rectifying the induced power signal and comprising at least one switch element arranged to switch a path from the input to the output between a conductive mode and a non-conductive mode in response to a switch control signal;
generating the switch control signal in dependence on the induced power signal;
receiving data for communication to the power transmitter (101) and to generate a load modulation signal indicative of load variations representing the data; and
adapting the switch control signal in response to the load modulation signal.
